# EUROPÄISCHE PATENTSCHRIFT

(11) **EP 1 903 664 B1**
(45) Veröffentlichungstag und Bekanntmachung des Hinweises auf die Patenterteilung: **29.03.2017**
(21) Anmeldenummer: 07016721.8
(22) Anmeldetag: 27.08.2007
(51) Int. Cl.: H02K 9/22, H02K 7/108, H02K 11/04

(54) **Elektrischer Antrieb**
Electric drive
Entraînement électrique

(30) Priorität: 21.09.2006 DE 102006044541
(43) Veröffentlichungstag der Anmeldung: 26.03.2008
(73) Patentinhaber: Schaeffler Technologies AG & Co. KG, 91074 Herzogenaurach (DE)
(72) Erfinder: Gramann, Matthias, 77871 Renchen (DE); Botiov, Julian, 77815 Bühl (DE); Menzel, Michael, 77833 Ottersweier (DE)

(56) Entgegenhaltungen:
- EP-A2- 0 909 006
- DE-A1- 10 338 140
- DE-C1- 19 900 559
- JP-A- 1 252 138
- JP-A- 2005 117 752
- US-A- 4 538 967
- US-A- 4 597 555

## Beschreibung

Die Erfindung betrifft einen elektrischen Antrieb, mit einem Elektromotor, der ein Motorgehäuse aufweist, das über eine Halterung mit einer Wärmesenke verbunden oder verbindbar ist.

Ein derartiger Elektromotor zum Betätigen einer Kupplung für ein Kraftfahrzeug ist aus der Praxis bekannt. Er weist ein fest mit dem Stator des Elektromotors verbundenes Motorgehäuse auf, in dem eine elektrische Leiterplatte angeordnet ist. Auf der Leiterplatte sind passive elektronische Bauelemente und Hall-Sensoren zur Erfassung der Relativposition zwischen Rotor und Stator angeordnet. Der Elektromotor ist mit seiner Vorderseite gegen eine Kupplungsglocke abgestützt und mit seiner Rückseite gegen eine Halteplatte positioniert, die mit Hilfe von langen Schauben, die etwa parallel zur Rotationsachse des Rotors verlaufen, mit der Kupplungsglocke verspannt ist. Der elektrische Antrieb hat den Nachteil, dass sich der Elektromotor beim Betätigen der Kupplung insbesondere aufgrund der in der Motor-Wicklung auftretenden Verluste, erwärmt. Die Verlustwärme wird jedoch nur schlecht an die Umgebung und die Kupplungsglocke abgeführt. Bei ungünstigen Betriebszuständen, wie z.B. bei hohen Außentemperaturen, Volllastbetrieb der das Kraftfahrzeug antreibenden Verbrennungsmaschine und häufigem Schalten können dadurch unzulässig hohe Betriebstemperaturen an der Leiterplatte und den darauf befindlichen elektronischen Bauelementen auftreten. Um eine thermische Überbelastung dieser sicherheitsrelevanten Bauteile zu vermeiden, müssen entsprechend temperaturbeständige Bauteile, wie z.B. Keramikträger und Hochtemperatur-Hall ICs verwendet werden. Diese sind jedoch relativ teuer.

Elektrische Antriebe mit einem Motorgehäuse und einer Halterung sind aus JP 01 252 138 und EP 0 909 006 bekannt.

Es besteht deshalb die Aufgabe, einen elektrischen Antrieb der eingangs genannten Art zu schaffen, der kostengünstig herstellbar ist und geringe Betriebstemperaturen ermöglicht.

Diese Aufgabe wird durch einen elektrischen Antrieb gemäß Anspruch 1 gelöst.

Die Halterung weist ein wärmeleitfähiges Halteteil mit einem hülsenartigen Halteabschnitt und einem wärmeleitend damit verbundenen Befestigungsflansch au, wobei der hülsenartige Halteabschnitt mit seiner Innenumfangswand den Elektromotor an seinem Außenumfang flächig kontaktiert, und wobei der Befestigungsflansch Befestigungsstellen zum flächigen Verbinden mit einer Wärmesenke aufweist.

Über das Halteteil kann die beim Betrieb des Elektromotors insbesondere in dessen Wicklung auftretende Verlustwärme großflächig und mit geringem Wärmewiderstand an die Wärmesenke, die beispielsweise eine Kupplungsglocke oder ein Gehäuse eines automatisierten Schaltgetriebes sein kann, abgeleitet werden. Die Temperatur im Inneren des Motorgehäuses reduziert sich dadurch entsprechend, so dass eventuelle in dem Motorgehäuse befindliche elektronische Bauelemente nur einer geringen thermischen Belastung ausgesetzt sind. Das Halteteil erfüllt also eine Doppelfunktion und dient außer zum Halten des Elektromotors auch zur Ableitung der Verlustwärme an die Wärmesenke. Der elektrische Antrieb ist dadurch kostengünstig herstellbar.

Der Befestigungsflansch weist mindestens zwei durch Unterbrechungsstellen in Umfangsrichtung voneinander beabstandete Flanschbereiche auf, an denen jeweils mindestens eine Befestigungsstelle zum flächigen Verbinden mit der Wärmesenke vorgesehen ist. Durch die Unterbrechungsstellen wird ermöglicht, dass die Flanschbereiche bei unterschiedlichen Temperaturen jeweils flächig an der Wärmesenke zur Anlage kommen. Ein thermischer Verzug des Befestigungsflanschs wird weitestgehend vermieden. Somit ist bei unterschiedlichen Temperaturen jeweils eine gute thermische Kontaktierung zwischen dem Befestigungsflansch und der Wärmesenke sichergestellt.

Zwischen in Umfangsrichtung zueinander benachbarten, die Befestigungsstellen aufweisenden ersten Flanschbereichen ist jeweils mindestens ein zweiter Flanschbereich angeordnet, der durch Unterbrechungsstellen von den ersten Flanschbereichen beabstandet ist und gegen die Rückstellkraft seines Werkstoffs federnd an der Wärmesenke anliegt. Dadurch wird einerseits eine gute thermische Anbindung der zweiten Flanschbereiche an die Wärmesenke ermöglicht und andererseits werden durch die Federkräfte des elastischen Werkstoffs des Befestigungsflanschs an den Befestigungsstellen vorgesehene, lösbare Befestigungselemente gegen unbeabsichtigtes Lösen gesichert, insbesondere beim Auftreten von Vibrationen oder Schwingungen.

Bei einer bevorzugten Ausführungsform der Erfindung weisen die zweiten Flanschbereiche in Umfangsrichtung eine größere Abmessung auf als die ersten Flanschbereiche. Der Befestigungsflansch wird dadurch thermisch noch besser an die Wärmesenke gekoppelt.

Zweckmäßigerweise haben die zweiten Flanschbereiche jeweils eine Lochung, die vorzugsweise als ein sich in Umfangsrichtung erstreckendes Langloch ausgebildet ist. Insbesondere beim Auftreten von Temperaturschwankungen kann dadurch eine noch gleichmäßigere, flächige Anpressung der zweiten Flanschbereiche an die Wärmesenke erreicht werden.

Die Flanschbereiche sind bevorzugt gleichmäßig über den Umfang des Halteteils verteilt. In dem Elektromotor kann dadurch das Auftreten von lokalen Erwärmungen weitgehend vermieden und somit eine homogene Temperaturverteilung erreicht werden.

Besonders vorteilhaft ist, wenn das Halteteil die Wicklung des Elektromotors überdeckt und in Axialrichtung vorzugsweise etwa mittig zu der Wicklung angeordnet ist. Auch durch diese Maßnahme kann in dem Elektromotor eine weitgehend homogene Temperaturverteilung erreicht werden. Die Wärme wird dort abgeführt, wo sie entsteht, nämlich dicht benachbart zu der Wicklung.

Bei einer zweckmäßigen Ausgestaltung der Erfindung weisen die Befestigungsstellen Durchtrittslochungen für Schrauben auf. Der elektrische Antrieb ist dann lösbar mit der Wärmesenke verbindbar, so dass er bei einem eventuellen Servicefall leicht ausgewechselt werden kann.

Vorteilhaft ist, wenn die Flanschbereiche einstückig mit dem Halteabschnitt verbunden sind und das Halteteil vorzugsweise als Stanz-Tiefziehteil ausgebildet ist. Dadurch ergibt sich einerseits eine gute Wärmeübertragung zwischen dem hülsenartigen Halteabschnitt und dem Befestigungsflansch und andererseits lässt sich das Halteteil kostengünstig in Serienfertigung herstellen.

Bei einer bevorzugten Ausführungsform der Erfindung weist der Werkstoff des Halteteils etwa den gleichen Wärmeausdehnungskoeffizient wie der Werkstoff der Wärmesenke auf, wobei das Halteteil vorzugsweise aus Stahl oder Aluminium besteht. Dadurch wird bei Temperaturschwankungen ein Verzug des Halteteils weitestgehend vermieden, wodurch unabhängig von der Temperatur stets eine gute Wärmeübertragung zwischen dem Halteteil und der Wärmesenke ermöglicht wird.

Das Halteteil ist bevorzugt stoffschlüssig mit der Außenumfangswand des Elektromotors verbunden, vorzugsweise durch mindestens eine Schweiß- und/oder Lötstelle. Der elektrische Antrieb ist dann noch kostengünstiger herstellbar.

Nachfolgend sind Ausführungsbeispiele der Erfindung anhand der Zeichnung näher erläutert. Es zeigt:

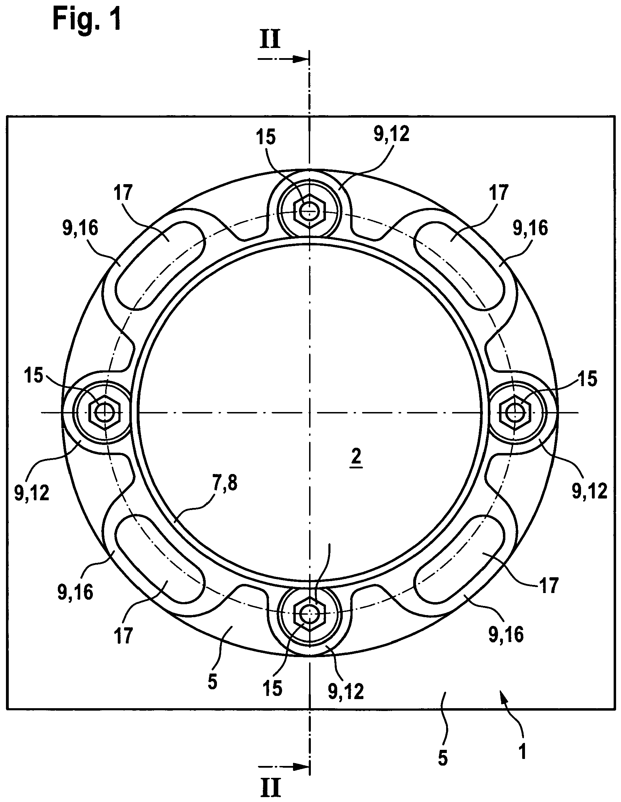

- Fig. 1: eine Aufsicht auf ein erstes Ausführungsbeispiel eines mit einer Wärmesenke verschraubten elektrischen Antriebs,
- Fig. 2: eine Seitenansicht des in Montagestellung befindlichen elektrischen Antriebs, wobei der elektrische Antrieb und die Wärmesenke entlang der in Fig. 1 mit II bezeichneten Ebene teilweise im Längsschnitt gezeichnet sind und wobei von dem Elektromotor des Antriebs nur ein Gehäuseteil, die Motorwicklung und die Motor-Welle dargestellt sind,
- Fig. 3: eine Seitenansicht eines zweiten Ausführungsbeispiels des elektrischen Antriebs, wobei der elektrische Antrieb und die Wärmesenke teilweise im Längsschnitt gezeichnet sind und wobei von dem Elektromotor nur das Gehäuseteil, die Motorwicklung und die Motor-Welle dargestellt sind,
- Fig. 4: eine Explosionsdarstellung der in Fig. 3 gezeigten Anordnung,
- Fig. 5: eine Seitenansicht eines dritten Ausführungsbeispiels des elektrischen Antriebs, wobei der elektrische Antrieb und die Wärmesenke teilweise im Längsschnitt gezeichnet sind und wobei von dem Elektromotor nur das Gehäuseteil, die Motorwicklung und die Motor-Welle dargestellt sind, und

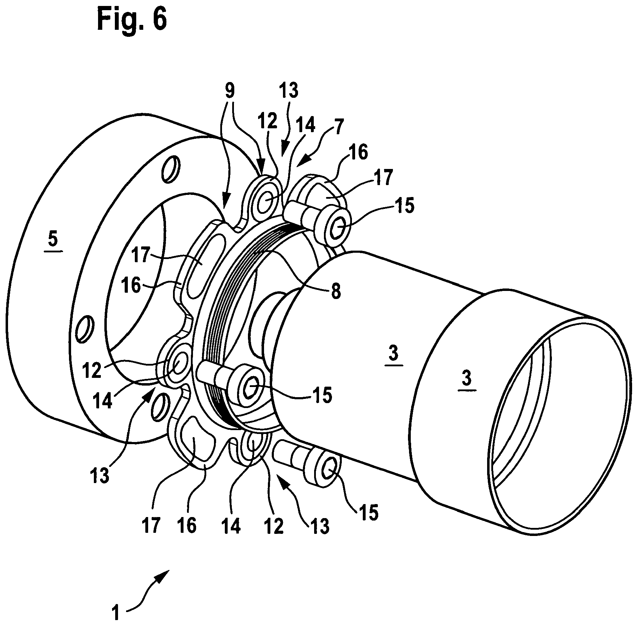

- Fig. 6: eine Explosionsdarstellung der in Fig. 5 gezeigten Anordnung,
- Fig. 7: einen Längsschnitt durch ein wärmeleitendes Halteteil entlang der in Fig. 8 mit VII bezeichneten Ebene und
- Fig. 8: eine Aufsicht auf das Halteteil.

Ein im Ganzen mit 1 bezeichneter elektrischer Antrieb hat einen Elektromotor 2, der ein etwa hülsenförmiges Motorgehäuse 3 aufweist, in dem in an sich bekannter Weise ein in der Zeichnung nicht näher dargestellter Statorkern mit einer Wicklung 4 und ein Rotor angeordnet sind. Das Motorgehäuse 3 besteht vorzugsweise aus ferromagnetischem Stahl.

Der Rotor ist mittels einer Lagerung relativ zu dem Statorkern verdrehbar gelagert. Der Rotor ist auf einer Welle 6 angeordnet, die mit einem anzutreibenden Teil in Antriebsverbindung steht. Zwischen dem Statorkern und dem Rotor ist ein Luftspalt vorgesehen, über den der Stator über ein magnetisches Wanderfeld mit dem Rotor zusammenwirkt. Der Elektromotor 2 kann ein EC-Motor mit einer in der Innenhöhlung des Motorgehäuses 3 angeordneten Leiterplatte sein, auf der elektronische Bauelemente, insbesondere Hall-Sensoren angeordnet sind.

Das hülsenförmige Motorgehäuse 3 ist über eine Halterung mit einer Wärmesenke 5 verbunden. Die Wärmesenke 5 besteht bevorzugt aus Aluminium oder einer AluminiumLegierung und kann beispielsweise eine Kupplungsglocke oder ein Getriebegehäuse eines Kraftfahrzeugs sein. Die Halterung hat ein wärmeleitfähiges Halteteil 7 mit einem hülsenartigen Halteabschnitt 8 und einem einstückig damit verbundenen Befestigungsflansch 9. Das Halteteil 7 besteht aus Stahl und wird durch einen Stanz-Tiefziehvorgang aus einem Stück Blech hergestellt.

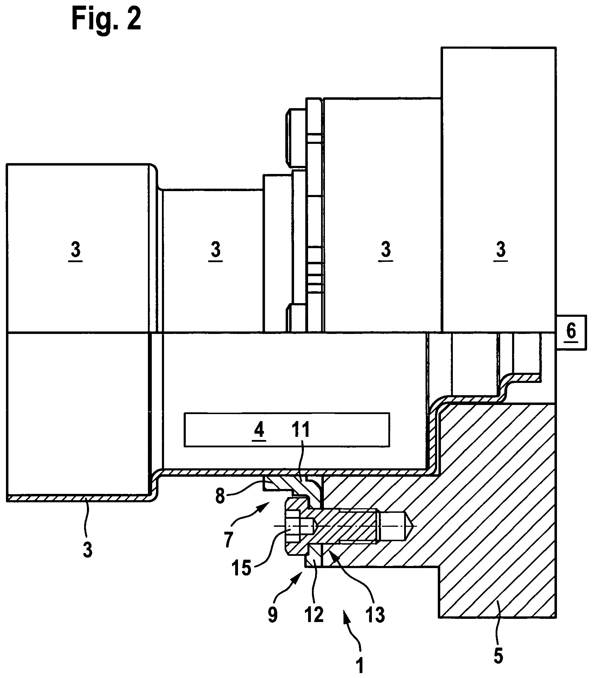

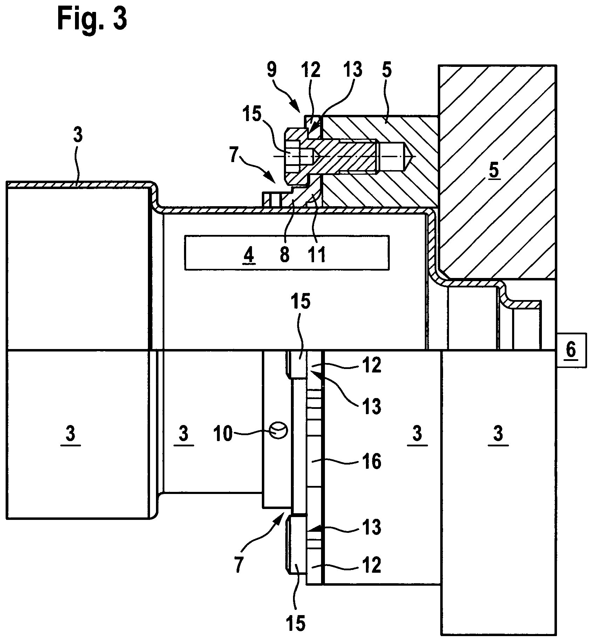

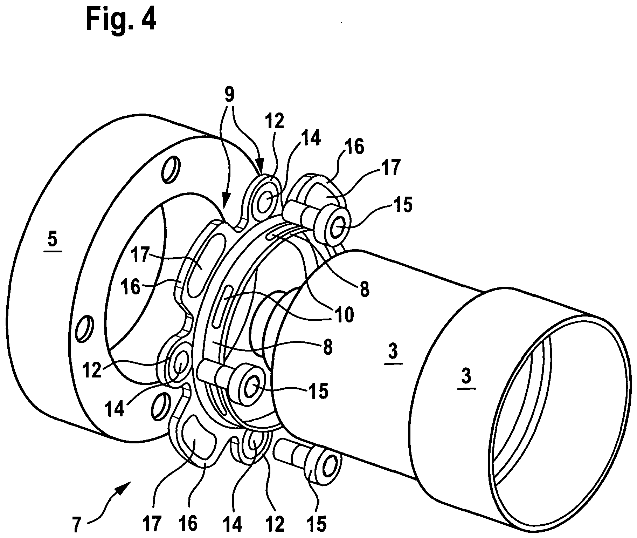

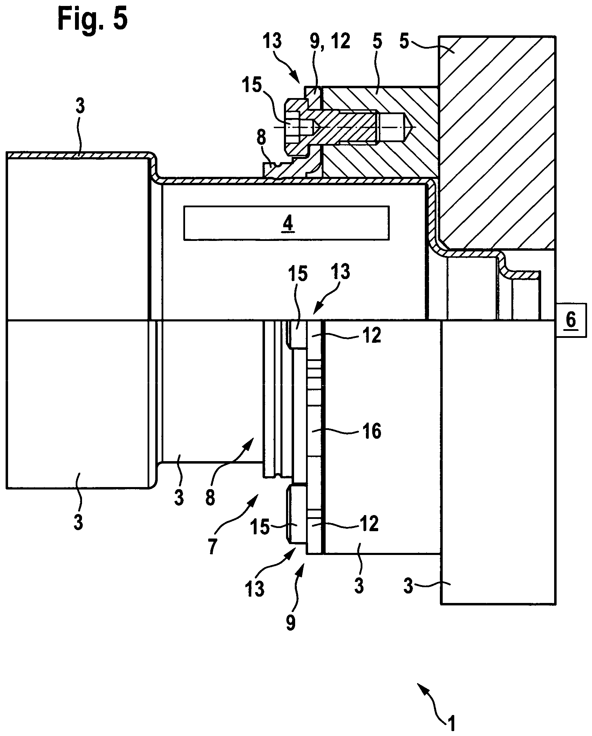

Wie in Fig. 2, 3 und 5 erkennbar ist, liegt der Halteabschnitt 8 mit seiner Innenumfangswand flächig wärmeleitend am Außenumfang des Motorgehäuses 3 an. Bei dem in Fig. 2 gezeigten Ausführungsbeispiel ist der Halteabschnitt 8 mit der Außenwand des Motorgehäuses 3 verschweißt oder verlötet. In Fig. 3 und 4 ist erkennbar, dass der Halteabschnitt 8 vor dem Verlöten oder Verschweißen mit dem Motorgehäuse 3 Ausschnitte 10 aufweisen kann, an denen Schweißnähte bzw. die Lötstellen angebracht werden. Die Ausschnitte 10 sind bevorzugt als Langlöcher ausgestaltet, die mit ihrer Längserstreckung in Umfangsrichtung des Motorgehäuses 3 verlaufen. Anstelle der Schweiß- oder Lötverbindung kann auch eine Nietverbindung vorgesehen sein, bei der die Nieten die Ausschnitte 10 durchsetzen. Bei dem in Fig. 4 und 5 gezeigten Ausführungsbeispiel ist der Halteabschnitt 8 durch Rollieren mit dem Motorgehäuse 3 verbunden.

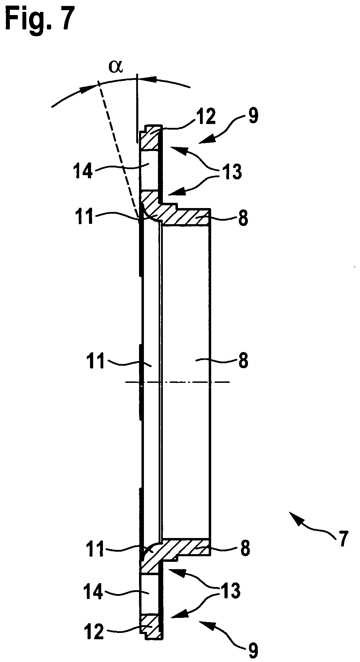

Der Befestigungsflansch 9 erstreckt sich in einer etwa rechtwinklig zur Längsmittelachse des Halteabschnitts 8 verlaufenden Ebene und ist über einen gerundeten Verbindungsbereich 11 einstückig mit diesem verbunden (Fig. 7). Mit seiner dem Halteabschnitt 8 abgewandten Flachseite liegt der Befestigungsflansch 9 plan an einem zu dem Befestigungsflansch 9 passenden Gegenflansch der Wärmesenke 5 an.

Wie in Fig. 7 besonders gut erkennbar ist, weist der Befestigungsflansch 9 zum Verbinden mit der Wärmesenke 5 mehrere erste Flanschbereiche 12 auf, an denen Befestigungsstellen 13 vorgesehen sind, die Durchtrittslochungen 14 für Schrauben 15 aufweisen. Die Schrauben 15 sind mit in der Wärmesenke 5 vorgesehenen Gewindebohrungen verschraubt. An der dem Halteabschnitt 8 zugewandten Seite der Befestigungsstellen 13 liegen die Schraubenköpfe der Schrauben 15 und an der gegenüberliegenden anderen Seite der Befestigungsstellen 13 die Wärmesenke 5 plan an.

Zwischen in Umfangsrichtung zueinander benachbarten ersten Flanschbereichen 12 ist jeweils ein zweiter Flanschbereich 16 angeordnet ist. Zwischen zueinander benachbarten ersten und zweiten Flanschbereichen 12, 16 weist der Befestigungsflansch jeweils eine Unterbrechungsstelle auf, durch die der erste Flanschbereich12 in Umfangsrichtung von dem zweiten Flanschbereich 16 beabstandet ist. Die Flanschbereiche 12, 16 sind gleichmäßig über den Umfang des Halteteils 7 verteilt, nämlich im Abstand von 45° bezogen auf ihre Mittelpunkte. In Umfangsrichtung des Halteabschnitts 8 haben die zweiten Flanschbereiche 16 eine größere Abmessung als die ersten Flanschbereiche 12. Die Außenkonturen der Flanschbereiche 12, 16 sind gerundet.

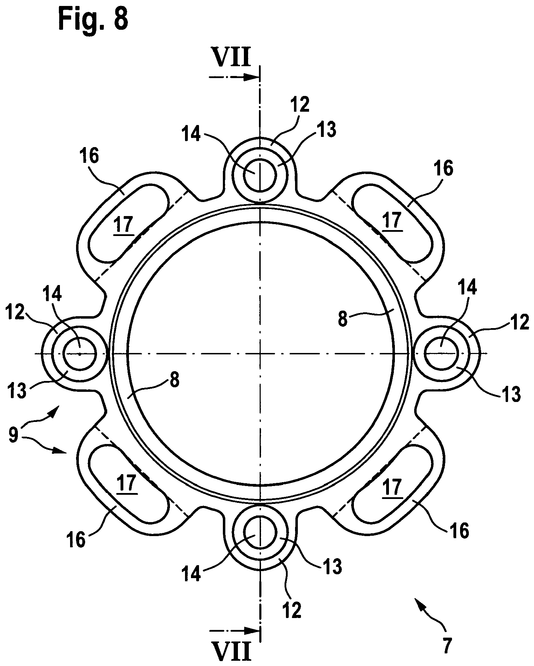

Wie in Fig. 8 erkennbar ist, sind in der Vormontagestellung des Halteteils 7 die Flächen, in denen sich die zweiten Flanschbereiche 16 erstrecken, derart gegenüber den Flächen, in denen sich die ersten Flanschbereiche 12 erstrecken, um einen Winkel α geneigt, dass die zweiten Flanschbereiche 16 mit ihrem äußeren Randbereich etwas gegenüber den entsprechenden äußeren Randbereichen der ersten Flanschbereiche 12 in Richtung auf die Wärmesenke 5 vorstehen. Beim Verschrauben des Halteteils 7 mit der Wärmesenke 5 verformt sich der Befestigungsflansch elastisch, wodurch die zweiten Flanschbereiche 16 durch die Rückstellkraft des Werkstoffs des Halteteils 7 federnd an die Wärmesenke 5 angepresst werden. Dabei kommen die zweiten Flanschbereiche 16 flächig wärmeleitend an der Wärmesenke 5 zur Anlage.

In Fig. 7 ist erkennbar, dass die zweiten Flanschbereiche 16 jeweils ein sich in Umfangsrichtung erstreckendes Langloch 17 aufweisen. Beim Auftreten von Temperaturveränderungen kommen dadurch die zweiten Flanschbereiche 16 noch gleichmäßiger und flächiger an der Wärmesenke 5 zur Anlage.

In Fig. 2, 3 und 5 ist erkennbar, dass das in Axialrichtung etwa mittig zu der Wicklung 4 des Elektromotors 2 angeordnet ist und diese ringförmig umgrenzt. Dadurch wird die in der Wicklung 4 auftretende Verlustwärme weitgehend symmetrisch aus dem Elektromotor 2 abgeführt.

### Bezugszeichenliste

- 1: elektrischer Antrieb
- 2: Elektromotor
- 3: Motorgehäuse
- 4: Wicklung
- 5: Wärmesenke
- 6: Welle
- 7: Halteteil
- 8: Halteabschnitt
- 9: Befestigungsflansch
- 10: Ausschnitte
- 11: Verbindungsbereich
- 12: erster Flanschbereich
- 13: Befestigungsstelle
- 14: Durchtrittslochungen
- 15: Schrauben
- 16: zweiter Flanschbereich
- 17: Langloch

## Patentansprüche

1. Elektrischer Antrieb (1), mit einem Elektromotor (2), der ein Motorgehäuse (3) aufweist, das über eine Halterung mit einer Wärmesenke (5) verbindbar ist,, wobei die Halterung ein wärmeleitfähiges Halteteil (7) mit einem hülsenartigen Halteabschnitt (8) und einen wärmeleitend damit verbundenen Befestigungsflansch (9) aufweist, der hülsenartige Halteabschnitt (8) mit seiner Innenumfangswand den Elektromotor (2) an seinem Außenumfang flächig kontaktiert, der Befestigungsflansch (9) Befestigungsstellen (13) zum flächigen Verbinden mit einer Wärmesenke (5) aufweist,der Befestigungsflansch (9) mindestens zwei durch Unterbrechungsstellen in Umfangsrichtung voneinander beabstandete Flanschbereiche (12) aufweist, an denen jeweils mindestens eine Befestigungsstelle (13) zum flächigen Verbinden mit der Wärmesenke (5) vorgesehen ist, **dadurch gekennzeichnet, dass** zwischen in Umfangsrichtung zueinander benachbarten, die Befestigungsstellen (13) aufweisenden ersten Flanschbereichen (12) jeweils mindestens ein zweiter Flanschbereich (16) angeordnet ist, der durch Unterbrechungsstellen von den ersten Flanschbereichen (12) beabstandet ist und gegen die Rückstellkraft seines Werkstoffs federnd an der Wärmesenke (5) anlegbar ist.

2. Elektrischer Antrieb (1) nach Anspruch 1, **dadurch gekennzeichnet, dass** die zweiten Flanschbereiche (16) in Umfangsrichtung eine größere Abmessung aufweisen als die ersten Flanschbereiche (12).

3. Elektrischer Antrieb (1) nach einem der Ansprüche 1 und 2, **dadurch gekennzeichnet, dass** die zweiten Flanschbereiche (16) jeweils eine Lochung aufweisen, die vorzugsweise als ein sich in Umfangsrichtung erstreckendes Langloch (17) ausgebildet ist.

4. Elektrischer Antrieb (1) nach einem der Ansprüche 1 bis 3 **dadurch gekennzeichnet, dass** die Flanschbereiche (12, 16) gleichmäßig über den Umfang des Halteteils (7) verteilt sind.

5. Elektrischer Antrieb (1) nach einem der Ansprüche 1 bis 4, **dadurch gekennzeichnet, dass** das Halteteil (7) die Wicklung (4) des Elektromotors (2) überdeckt und in Axialrichtung vorzugsweise etwa mittig zu der Wicklung (4) angeordnet ist.

6. Elektrischer Antrieb (1) nach einem der Ansprüche 1 bis 5, **dadurch gekennzeichnet, dass** die Befestigungsstellen (13) Durchtrittslochungen (14) für Schrauben (15) aufweisen.

7. Elektrischer Antrieb (1) nach einem der Ansprüche 1 bis 6, **dadurch gekennzeichnet, dass** die Flanschbereiche (12, 16) einstückig mit dem Halteabschnitt (8) verbunden sind und dass das Halteteil (7) vorzugsweise als Stanz-Tiefziehteil ausgebildet ist.

8. Elektrischer Antrieb (1) nach einem der Ansprüche 1 bis 7, **dadurch** gekennzeichn dass das Halteteil (7) stoffschlüssig mit der Außenumfangswand des Elektromotors verbunden ist, vorzugsweise durch mindestens eine Schweiß- und/oder Lötstelle.

## Claims

1. Electric drive (1), comprising an electric motor (2) which has a motor housing (3) which can be connected to a heat sink (5) by means of a holder, wherein the holder has a thermally conductive holding part (7) comprising a sleeve-like holding section (8) and has a fastening flange (9) which is connected to the said holding part in a thermally conductive manner, the sleeve-like holding section (8), by way of its internal circumferential wall, makes surface contact with the outer circumference of the electric motor (2), the fastening flange (9) has fastening points (13) for making surface contact with a heat sink (5), the fastening flange (9) has at least two flange regions (12) which are spaced apart from one another in the circumferential direction by interruption points and at which in each case at least one fastening point (13) for surface connection to the heat sink (5) is provided, **characterized in that** at least one second flange region (16) is respectively arranged between first flange regions (12) which are adjacent to one another in the circumferential direction and have the fastening points (13), the said second flange region being spaced apart from the first flange regions (12) by interruption points and it being possible for the said second flange region to be placed on the heat sink (5) in a resilient manner, against the restoring force of the material of the said second flange region.

2. Electric drive (1) according to Claim 1, **characterized in that** the second flange regions (16) have larger dimensions in the circumferential direction than the first flange regions (12).

3. Electric drive (1) according to either of Claims 1 and 2, **characterized in that** the second flange regions (16) each have a hole arrangement which is preferably in the form of an elongate hole (17) which extends in the circumferential direction.

4. Electric drive (1) according to one of Claims 1 to 3, **characterized in that** the flange regions (12, 16) are uniformly distributed over the circumference of the holding part (7).

5. Electric drive (1) according to one of Claims 1 to 4, **characterized in that** the holding part (7) covers the winding (4) of the electric motor (2) and is arranged preferably approximately centrally in relation to the winding (4) in the axial direction.

6. Electric drive (1) according to one of Claims 1 to 5, **characterized in that** the fastening points (13) have passage hole arrangements (14) for screws (15).

7. Electric drive (1) according to one of Claims 1 to 6, **characterized in that** the flange regions (12, 16) are integrally connected to the holding section (8), and **in that** the holding part (7) is preferably in the form of a stamped and deep-drawn part.

8. Electric drive (1) according to one of Claims 1 to 7, **characterized in that** the holding part (7) is cohesively connected to the outer circumferential wall of the electric motor, preferably by at least one weld and/or solder point.

## Revendications

1. Entraînement électrique (1) comportant un moteur électrique (2) qui comprend un boîtier de moteur (3) pouvant être relié par l'intermédiaire d'un support à un puits thermique (5), dans lequel le support comprend une pièce de maintien thermiquement conductrice (7) ayant une partie de maintien en forme de manchon (8) et une bride de fixation (9) reliée à celle-ci de manière thermiquement conductrice, la partie de maintien en forme de manchon (8) est en contact plan par sa paroi circonférentielle intérieure avec le moteur électrique (2) sur sa circonférence extérieure, la bride de fixation (9) comprend des points de fixation (13) destinés être reliés de manière plane à un puits thermique (5), la bride de fixation (9) comprend au moins deux zones de bride (12) espacées l'une de l'autre par des points d'interruption dans la direction circonférentielle, zones au niveau desquelles il est prévu au moins un point de fixation (13) respectif pour une liaison plane au puits thermique (5), **caractérisé en ce que**, entre des première zones de bride (12) présentant les points de fixation (13) voisins les uns des autres dans la direction circonférentielle, se trouve au moins une deuxième zone de bride (16) respective qui est espacée des premières zones de bride (12) par des points d'interruption et peut être sollicitée de manière élastique sur le puits thermique (5) en s'opposant à la force de rappel de son matériau.

2. Entraînement électrique (1) selon la revendication 1, **caractérisé en ce que** les deuxièmes zones de bride (16) présentent une dimension plus importante dans la direction circonférentielle que les premières zones de bride (12).

3. Entraînement électrique (1) selon l'une quelconque des revendications 1 et 2, **caractérisé en ce que** les deuxièmes zones de bride (16) présentent respectivement une perforation qui est de préférence réalisée sous la forme d'un trou longitudinal (17) s'étendant dans la direction circonférentielle.

4. Entraînement électrique (1) selon l'une quelconque des revendications 1 à 3, **caractérisé en ce que** les zones de bride (12, 16) sont réparties régulièrement sur la circonférence de la pièce de maintien (7).

5. Entraînement électrique (1) selon l'une quelconque des revendications 1 à 4, **caractérisé en ce que** la pièce de maintien (7) recouvre l'enroulement (4) du moteur électrique (2) et est de préférence disposée au centre de l'enroulement (4) dans la direction axiale.

6. Entraînement électrique (1) selon l'une quelconque des revendications 1 à 5, **caractérisé en ce que** les points de fixation (13) présentent des perforations de traversée (14) destinées à des vis (15).

7. Entraînement électrique (1) selon l'une quelconque des revendications 1 à 6, **caractérisé en ce que** les zones de bride (12, 16) sont reliées de manière solidaire à la partie de maintien (8) et **en ce que** la pièce de maintien (7) est de préférence réalisée sous la forme d'une pièce estampée et emboutie.

8. Entraînement électrique (1) selon l'une quelconque des revendications 1 à 7, **caractérisé en ce que** la pièce de maintien (7) est reliée par complémentarité de matériau avec la paroi circonférentielle extérieure du moteur électrique, de préférence par au moins un point de soudure et/ou de brasage.
